# EUROPEAN PATENT SPECIFICATION

(11) **EP 2 517 867 B1**
(45) Date of publication and mention of the grant of the patent: **25.12.2013**
(21) Application number: 12164928.9
(22) Date of filing: 20.04.2012
(51) Int. Cl.: B29D 30/06

(54) **Blade for a mold, mold segment or mold comprising such a blade and method of securing a mold blade to a mold segment**
Klinge für eine Form, Formsegment oder Form mit einer derartigen Klinge und Verfahren zum Sichern einer Formklinge an einem Formsegment
Lame pour un moule, segment de moule ou moule comportant une telle lame et procédé de fixation d'une lame de moule sur un segment de moule

(30) Priority: 25.04.2011 US 201113093148
(43) Date of publication of application: 31.10.2012
(73) Proprietor: The Goodyear Tire & Rubber Company, Akron, OH 44316-0001 (US)
(72) Inventor: Severens, Frank, B-6700 Frassem-Arlon (BE); Henin, Bernard Marie, B-6761 Latour (BE); Georges, Claude, L-1742 Luxembourg (LU); Karabulut, Celal, F-57290 Fameck (FR); Neuberg, Hubert, B-6700 Arlon (BE)
(74) Representative: Kutsch, Bernd

(56) References cited:
- EP-A1- 1 676 694
- EP-A1- 1 782 970
- EP-A1- 2 072 286
- WO-A1-2010/039148
- WO-A1-2010/077375
- JP-A- 8 025 361
- JP-A- 2002 316 328
- KR-A- 20060 002 277
- US-A- 4 553 918

## Description

### Field of the Invention

The present invention is directed to a mold, in particular to a pneumatic tire curing mold. More particularly, the present invention is directed to a system and method for securing a bottom of a mold blade to the mold.

### Background of the Invention

Conventionally, long circumferential blades have been fixed to tire curing molds by gluing in a recess and providing spot welds on an anchorage foot at each segment end. With the new blades geometries such as a "rain drop blade" or a "blade groove ", the force necessary to remove a cured tire from a mold (e.g., demold) a tire has increased. Correspondingly, the risk that blades tear away from the mold segment has also increased. Thus an improved system or method for securing the blades to the mold segments would be desirable.

JP-A- 2002-316328 describes a tire mold segment comprising a blade wherein the blade comprises a pin extending across the length of the blade.

KR-A- 10-2006-0002277 describes the fixation of a blade in a tire mold segment wherein the blade comprises recesses and the tire mold segment comprises pins extending between adjacent surfaces of a slid in the mold segment.

WO-A- 2010/077375 describes a system for changing sipe blades for molding or retreading tires.

Further tire molds comprising blades are disclosed in US 2006/0151079 A1 and US 4,553,918.

### Summary of the Invention

The invention relates to a mold segment in accordance with claim 1, a tire mold in accordance with claim 10, and to a method in accordance with claim 11.

Dependent claims refer to preferred embodiments of the invention.

In a preferred aspect of the invention, the at least one pin element has an essentially round, elliptical, quadratic or rectangular cross section.

In a preferred aspect of the invention, the maximum diameter of the cross section of the at least one pin element is in a range of from 0.5 to 3 mm, alternatively 0.8 to 2 mm.

In a preferred aspect of the invention, the at least one pin element extends perpendicular to the blade across the length of the blade or makes an angle in a range of from 45º to 135º, alternatively 75º to 105º with the blade across the length of the blade.

In a preferred aspect of the invention, the at least one pin element is straight across the length of the blade.

In a preferred aspect of the invention, the at least one pin element is located radially inwardly from the radially outer end of blade preferably at a distance in a range of from 0.5 to 5 mm, alternatively 1 mm to 3 mm, from the radially outer end of blade.

In accordance with another preferred aspect of the present invention, each recess is filled by welding.

In accordance with still another preferred aspect of the present invention, an uncured tire is cured by at least one mold segment.

In accordance with yet another preferred aspect of the present invention, the mold blade extends in a circumferential direction around the inner surface of the mold segment.

In accordance with still another preferred aspect of the present invention, the pins extend in a lateral direction about the inner surface of the mold segment.

In accordance with yet another preferred aspect of the present invention, the mold blade extends perpendicularly to the pins.

In accordance with still another preferred aspect of the present invention, the mold blade extends in a lateral direction about the inner surface of the mold segment.

In accordance with yet another preferred aspect of the present invention, the pins extend in a circumferential direction about the inner surface of the mold segment.

A system for securing a mold blade to a mold segment in accordance with a preferred aspect of the present invention includes a plurality of pins placed across the length of the mold blade and a plurality of corresponding recesses on an inner surface of the mold segment. Each pin is placed within a recess securing the mold blade to the mold segment.

A method for securing a mold blade to a mold segment in accordance with the present invention comprises the steps of:
placing a plurality of pins across the length of the mold blade;
placing the pins in a plurality of corresponding recesses on an inner surface of the mold segment; and securing each pin within a recess thereby securing the mold blade to the mold segment.

The method further includes the step of filling each recess by welding.

In accordance with still another preferred aspect of the present invention, the method further includes curing a tire by at least one mold segment.

In accordance with yet another preferred aspect of the present invention, the method further includes the step of extending the mold blade in a circumferential direction around the inner surface of the mold segment.

In accordance with still another preferred aspect of the present invention, the method further includes the step of extending the pins in a lateral direction about the inner surface of the mold segment.

In accordance with yet another preferred aspect of the present invention, the method further includes the step of extending mold blade extends perpendicularly to the pins.

In accordance with still another preferred aspect of the present invention, the method further includes the step of extending the mold blade in a lateral direction about the inner surface of the mold segment.

In accordance with yet another preferred aspect of the present invention, the method further includes the step of extending the pins in a circumferential direction about the inner surface of the mold segment.

### Brief Description of the Drawings

The present invention will be described by way of example and with reference to the accompanying drawings in which:
FIG. 1 shows a perspective view of an example tread element for use with the present invention;
FIG. 2 shows part of an example mold blade that may be used to form the tread element of FIG. 1;
FIG. 3 shows a cross-sectional view of the example blade of FIG. 2;
FIG. 4 shows a schematic representation of an example mold blade in accordance with the present invention;
FIG. 5 shows a schematic representation of two of the mold blades of FIG. 4 secured to a tire curing mold; and
FIG. 6 shows a schematic isometric of two of the mold blades of FIG. 4 secured to a tire curing mold.

### Detailed Description of the Invention

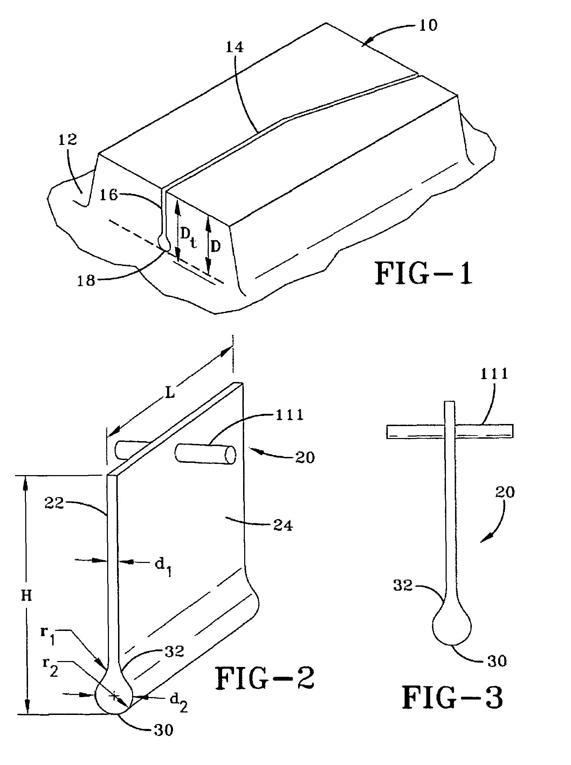

FIG. 1 shows a perspective of an example tread element 10 of a pneumatic tire tread for use with a mold or mold segment and method in accordance with the present invention. The tread element 10 may be formed by at least one groove 12, the groove 12 being either a circumferentially extending or laterally extending groove of the tire tread. If the tread element 10 is defined by only circumferentially extending grooves, the tread element may be a tread rib. If the tread element 10 is formed by grooves on at least three sides, the tread element 10 may be considered a tread block. The tread element 10 may be located in any position on a tread surface (e.g., along a tread shoulder, along the centerline, an intermediate position, etc.). The depth of the grooves 12 forming the example tread element 10 may define the non-skid depth Dₜ of the tire tread. If there are grooves D, Dₜ of differing depths, the maximum groove depth may define the non-skid depth Dₜ of the tread.

At least one sipe 14 may be disposed within the example tread element 10. The sipe 14 may subdivide the tread element 10 into two portions; however, the tread element 10 may alternatively have multiple sipes 14. The sipe 14 may be, for example, straight, curved, or have a general inclination in either the lateral or circumferential direction of the tire.

The sipe 14 may have a radially outer portion 16 having a width d₁ in the range of from 0.3 mm to 1.0 mm, or more specifically 0.5 mm to 0.8 mm. The width d₁ may be constant or the width of the radially outer sipe portion may vary. The sipe 14 may further comprise a radially inner portion 18 that has a diameter d₂ which is larger than d₁, and may be in the range of from 1.0 mm to 10.0 mm, or more specifically in the range of 2.0 mm to 6.0 mm or in the range of 2.0 mm to 4.0 mm. The width range upper limit of the radially inner sipe portion 18 may be limited by the ability to demold the tire and remove the forming blade without destroying the radially outer sipe portion 16 of the tire.

The sipe 14 may be formed from a mold blade 20, an example of which is partially shown in FIG. 2. During molding/curing of the tire tread, the blade 20 may form the sipe 14 that has a profile corresponding to the blade profile. The example blade 20 may be formed of a metal such as steel. The blade 20, depending upon the shape, may be direct milled, cast, or formed by stamping or embossing. The blade 20 may comprise a first radially outer portion 22 that has a width d₁ in a range of from 0.3 mm to 0.8 mm, and more specifically 0.5 mm to 0.8 mm. The width d₁ may be constant or the radially outer blade portion may vary. The first portion 22 may be formed from a flat, planar plate 24 having a defined length L, height H, and width/thickness d₁. The first portion 22 may also be curved or have three dimensional projections, or combinations thereof.

The mold blade 20 may further comprise a second portion 30 located at a radially inner end of the plate 24 (e.g., the base of the sipe of the tire tread). The second portion 30 may, for example, comprise an enlarged, rounded cross section or bulbous shape (e.g., the shape of a falling rain drop). The second portion 30 may be interconnected with the first portion 22 without corners or discontinuities. The second portion 30 may, for example, transition from the first portion 22 by a radiused smooth surface 32 having its center located outside the second portion 30. The surface 32 may comprise a radius r₁ in the range of from 0.5 mm to 8.0 mm, and more specifically in the range of 1.0 mm to 3.0 mm. A radius r₂ of the second portion 30 may range from 0.5 mm to 5.0 mm, or more specifically from 1.5 mm to 2.5 mm. The ratio of the transition radius to the second portion radius r₁/r₂ may range from 0.1 mm to 16.0 mm, or more specifically from 0.3 mm to 4.0 mm.

Conventionally, long, circumferentially extending mold blades have been secured to tire molds by gluing the blade in a corresponding circumferentially extending recess in the tire mold and spot welding each end of the blade to the tire mold. With the advent of varying blade geometries, such as "rain drop blade" or "blade groove" (see FIGS. 2 & 3), the force necessary to demold a tire from the tire mold has also increased, thereby increasing the frequency of the blade tearing away from the tire mold during demolding. A system and method in accordance with the present invention may provide increased anchoring for securing mold blades to tire molds.

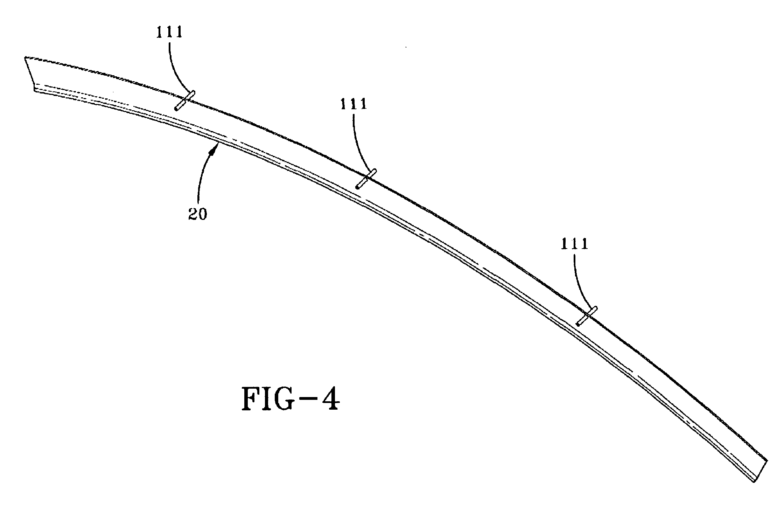

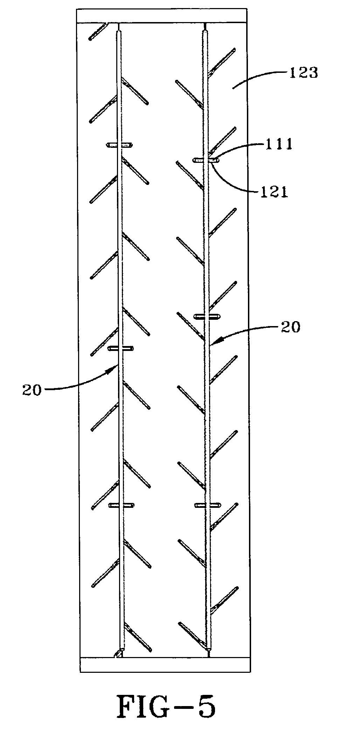

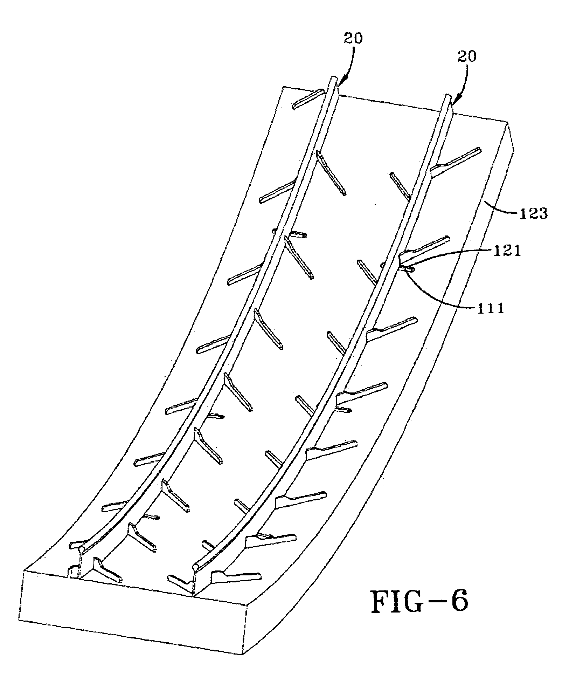

The system and method may provide several pins 111 (three in FIG. 4) placed across the length of the blade 20 and secured perpendicularly thereto; and several recesses 121 corresponding to the pins, each recess on the inner surface of the mold segment 123. Each pin 111 may be placed within a recess 121. Each recess 121 (six in FIGS. 5 & 6) may then be filled by welding thereby securing the blade 20 to the mold segment 123. The mold segment 123 may be buffed and used in a curing press. Alternatively, the mold blade 20 may extend laterally and the pins 111 may extend circumferentially (e.g., for forming lateral grooves in a tire tread).

The terms "radially inner portion", "radially outer portion", "radially inwardly", "inner surface" of the mold segment as used in this specification and the claims refer to the situation when the blade is mounted to the respective mold segment or mold for use as a tire mold for molding a pneumatic tire, i.e. the radial direction extends perpendicular for the axis of rotation of the respective tire with "inner" being closer to the axis of rotation than "outer".

## Claims

1. A mold segment, in particular a tire mold segment, the mold segment comprising a blade (20), the blade (20) comprising a radially inner portion and a radially outer portion (22) and extending along a length (L), the blade (20) further comprising at least one pin element (111), the pin element extending across the length (L) of the blade (20), wherein the mold segment comprises at least one recess (121) on an inner surface of the mold segment, wherein the at least one pin element (111) is placed within the at least one recess (121) securing the blade (20) to the mold segment, and wherein the at least one pin element (111) is secured to the respective recess (121) by welding or brazing.

2. The mold segment of claim 1 wherein the at least one pin element (111) has an essentially round, elliptical, quadratic or rectangular cross section, and/or wherein the maximum diameter of the cross section of the at least one pin element (111) is in a range of from 0.5 to 3 mm, alternatively 0.8 to 2 mm.

3. The mold segment of at least one of the previous claims wherein the at least one pin element (111) extends perpendicular to the blade (20) across the length (L) of the blade (20) or makes an angle in a range of from 45º to 135º, alternatively 75º to 105º with the blade (20) across the length (L) of the blade (20).

4. The mold segment of at least one of the previous claims wherein the at least one pin element (111) is straight across the length (L) of the blade (20).

5. The mold segment of at least one of the previous claims wherein the at least one pin element (111) is located radially inwardly from the radially outer end of blade (20) preferably at a distance in a range of from 0.5 to 5 mm, alternatively 1 mm to 3 mm, from the radially outer end of blade (20).

6. The mold segment of claim 1 comprising a plurality of said pin elements (111) placed across the length (L) of the blade (20) and a plurality of corresponding recesses (121) on the inner surface of the mold segment, wherein each pin element (111) is placed within a respective recess (121) securing the blade (20) to the mold segment.

7. The mold segment of claim 6 wherein each pin element (111) is secured to the respective recess (121) by welding or brazing.

8. The mold segment as set forth in at least one of the previous wherein the blade (20) extends in a circumferential direction around the inner surface of the mold segment and/or wherein the one or more pin elements (111) extend in a lateral direction about the inner surface of the mold segment.

9. The mold segment as set forth in at least one of the previous claims wherein the blade (20) extends perpendicular to the one or more pin elements (111).

10. A tire mold comprising one or more mold segments in accordance with at least one of the previous claims.

11. A method for securing a mold blade (20) to a mold segment, the method comprising the steps of:
placing one or more pin elements (111) across a length (L) of a mold blade (20);
placing the one or more pin elements (111) in one or more recesses (121) on an inner surface of the mold segment; and
securing each pin element (111) within the one or more recesses (121) by filling the one or more recesses (121) by welding or brazing thereby securing the mold blade (20) to the mold segment.

## Patentansprüche

1. Formsegment, spezieller ein Reifenformsegment, wobei das Formsegment eine Lamelle (20) umfasst, die Lamelle (20) einen radial inneren Teil und einen radial äußeren Teil (22) umfasst und sich über eine Länge (L) erstreckt, wobei die Lamelle (20) mindestens ein Stiftelement (111) umfasst, wobei das Stiftelement sich quer durch die Länge (L) der Lamelle (20) erstreckt, wobei das Formsegment mindestens eine Ausnehmung (121) an einer Innenseite des Formsegments umfasst, wobei das mindestens eine Stiftelement (111) in der mindestens einen Ausnehmung (121) platziert ist, wodurch es die Lamelle (20) an dem Formsegment sichert, und wobei das mindestens eine Stiftelement (111) durch Schweißen oder Hartlöten an der betreffenden Ausnehmung (121) gesichert ist.

2. Formsegment nach Anspruch 1, wobei das mindestens eine Stiftelement (111) einen im Wesentlichen runden, elliptischen, quadratischen oder rechteckigen Querschnitt aufweist und/oder wobei der maximale Durchmesser des Querschnitts des mindestens einen Stiftelements (111) in einem Bereich von 0,5 bis 3 mm, alternativ 0,8 bis 2 mm liegt.

3. Formsegment nach mindestens einem der vorgenannten Ansprüche, wobei das mindestens eine Stiftelement (111) sich senkrecht zu der Lamelle (20) quer durch die Länge (L) der Lamelle (20) erstreckt oder einen Winkel in einem Bereich von 45° bis 135°, alternativ 75° bis 105°, mit der Lamelle (20) quer durch die Länge (L) der Lamelle (20) beschreibt.

4. Formsegment nach mindestens einem der vorgenannten Ansprüche, wobei das mindestens eine Stiftelement (111) quer durch die Länge (L) der Lamelle (20) gerade ist.

5. Formsegment nach mindestens einem der vorgenannten Ansprüche, wobei das mindestens eine Stiftelement (111) sich radial einwärts von dem radial äußeren Ende der Lamelle (20) befindet, bevorzugt in einem Abstand in einem Bereich von 0,5 bis 5 mm, alternativ 1 mm bis 3 mm, von dem radial äußeren Ende der Lamelle (20).

6. Formsegment nach Anspruch 1, umfassend eine Vielzahl besagter Stiftelemente (111), die quer durch die Länge (L) der Lamelle (20) platziert sind, und eine Vielzahl von entsprechenden Ausnehmungen (121) an der Innenseite des Formsegments, wobei jedes Stiftelement (111) in einer betreffenden Ausnehmung (121) platziert ist, wodurch die Lamelle (20) an dem Formsegment gesichert wird.

7. Formsegment nach Anspruch 6, wobei jedes Stiftelement (111) durch Schweißen oder Hartlöten an der betreffenden Ausnehmung (121) gesichert ist.

8. Formsegment, wie in mindestens einem der vorgenannten Ansprüche erläutert, wobei die Lamelle (20) sich in einer Umfangsrichtung um die Innenseite des Formsegments erstreckt und/oder wobei das eine oder die mehreren Stiftelemente (111) sich in einer seitlichen Richtung über die Innenseite des Formsegments erstrecken.

9. Formsegment, wie in mindestens einem der vorgenannten Ansprüche erläutert, wobei die Lamelle (20) sich senkrecht zu dem einen oder den mehreren Stiftelementen (111) erstreckt.

10. Reifenform, umfassend ein oder mehrere Formsegmente gemäß mindestens einem der vorgenannten Ansprüche.

11. Verfahren zur Sicherung einer Formlamelle (20) an einem Formsegment, wobei das Verfahren die Schritte umfasst des:
Platzierens eines oder mehrerer Stiftelemente (111) quer durch eine Länge (L) einer Formlamelle (20);
Platzierens des einen oder der mehreren Stiftelemente (111) in einer oder mehreren Ausnehmungen (121) an einer Innenseite des Formsegments; und
Sicherns jedes Stiftelements (111) in der einen oder den mehreren Ausnehmungen (121) durch Füllen der einen oder mehreren Ausnehmungen (121) durch Schweißen oder Hartlöten, wodurch die Formlamelle (20) an dem Formsegment gesichert wird.

## Revendications

1. Segment de moule, en particulier segment de moule pour bandage pneumatique, le segment de moule comprenant une lame (20), la lame (20) comprenant une portion interne en direction radiale et une portion externe en direction radiale (22) et s'étendant sur une longueur (L), la lame (20) comprenant en outre au moins un élément en forme de cheville (111), l'élément en forme de cheville s'étendant sur la longueur (L) de la lame (20), dans lequel le segment de moule comprend au moins un évidement (121) sur la surface interne du segment de moule, dans lequel ledit au moins un élément en forme de cheville (111) est situé au sein dudit au moins un évidement (121) en fixant la lame (20) au segment de moule, et dans lequel ledit au moins un élément en forme de cheville (111) est fixé à l'évidement respectif (121) par soudage ou par brasage.

2. Segment de moule selon la revendication 1, dans lequel ledit au moins un élément en forme de cheville (111) possède une section transversale essentiellement ronde, elliptique, carrée ou rectangulaire, et/ou dans lequel le diamètre maximal de la section transversale dudit au moins un élément en forme de cheville (111) se situe dans la plage de 0,5 à 3 mm, en variante de 0,8 à 2 mm.

3. Segment de moule selon au moins une des revendications précédentes, dans lequel ledit au moins un élément en forme de cheville (111) s'étend perpendiculairement à la lame (20) sur la longueur (L) de la lame (20) ou forme un angle dans la plage de 45° à 135°, en variante de 75° à 105° avec la lame (20) sur la longueur (L) de la lame (20).

4. Segment de moule selon au moins une des revendications précédentes, dans lequel ledit au moins un élément en forme de cheville (111) est rectiligne sur la longueur (L) de la lame (20).

5. Segment de moule selon au moins une des revendications précédentes, dans lequel ledit au moins un élément en forme de cheville (111) est disposé à l'intérieur en direction radiale par rapport à l'extrémité externe de la lame (20) en direction radiale, de préférence à une distance dans la plage de 0,5 à 5 mm, en variante de 1 mm à 3 mm, de l'extrémité externe de la lame (20) en direction radiale.

6. Segment de moule selon la revendication 1, comprenant plusieurs desdits éléments en forme de cheville (111) disposés sur la longueur (L) de la lame (20) et plusieurs évidements correspondants (121) sur la surface interne du segment de moule, chaque élément en forme de cheville (111) étant disposé au sein d'un évidement respectif (121) en fixant la lame (20) au segment de moule.

7. Segment de moule selon la revendication 6, dans lequel chaque élément en forme de cheville (111) est fixé à l'évidement respectif (121) par soudage ou par brasage.

8. Segment de moule selon au moins une des revendications précédentes, dans lequel la lame (20) s'étend en direction circonférentielle autour de la surface interne du segment de moule et/ou dans lequel lesdits un ou plusieurs éléments en forme de cheville (111) s'étendent en direction latérale autour de la surface interne du segment de moule.

9. Segment de moule selon au moins une des revendications précédentes, dans lequel la lame (20) s'étend perpendiculairement auxdits un ou plusieurs éléments en forme de cheville (111).

10. Moule pour bandage pneumatique comprenant un ou plusieurs segments de moule selon au moins une des revendications précédentes.

11. Procédé pour fixer une lame de moule (20) à un segment de moule, le procédé comprenant les étapes consistant à :
placer un ou plusieurs éléments en forme de cheville (111) sur la longueur (L) d'une lame de moule (20) ;
placer lesdits un ou plusieurs éléments en forme de cheville (111) dans un ou plusieurs évidements (121) sur la surface interne du segment de moule ; et
fixer chaque élément en forme de cheville (111) au sein desdits un ou plusieurs évidements (121) en remplissant lesdits un ou plusieurs évidements (121) par soudage par brasage, pour ainsi fixer la lame de moule (20) au segment de moule.
